# EUROPEAN PATENT APPLICATION

(11) **EP 2 407 950 A2**
(43) Date of publication of application: **18.01.2012**
(21) Application number: 11152282.7
(22) Date of filing: 26.01.2011
(51) Int. Cl.: G08G 1/01, H04W 4/02, H04L 29/08

(54) **Gps trace filtering**

(30) Priority: 16.07.2010 US 365141 P
(71) Applicant: Research In Motion Limited, Waterloo, ON N2L 3W8 (CA)
(72) Inventor: Smartt, Brian Eric, Sunnyvale, CA 94089 (US)
(74) Representative: Fennell, Gareth Charles

(57) **Abstract**

A mobile device can function as a probe to sense conditions on roads and other areas of interest. A mobile device can have a GPS receiver to receive traces of GPS fixes. In a system with many such probes, it may be desirable to reduce an amount of GPS data reported by each device. To reduce such data reporting, a trace of GPS fixes is approximated by a selection of representative GPS fixes. Examples of how such a selection can be made are disclosed. Parameters and other behaviour by each device functioning as a probe can be set by central controller; for example, probes can be turned on and off, reporting frequencies can be adjusted, and thresholds used in the approximation can be set.

## Description

### CROSS-RELATED APPLICATIONS

This application claims the benefit of U.S. Provisional Application No. 61/1365,141 filed on July 16, 2010, which is incorporated herein by reference in its entirety.

### BACKGROUND

### Technical Field:

The following relates generally to navigation and traffic reporting systems, and in particular to systems and methods with traffic probes that can sense and report information.

### Related Art:

Rush hour traffic volume, road construction, vehicular collisions, and roadside emergencies are just a few examples of the various events and circumstances that can cause traffic congestion. Due to the nature of such events traffic congestion can be difficult to predict. Although radio, television, and online news sources can provide traffic information gathered using various techniques such as highway cameras, phone-in traffic tips, satellite imagery, and road sensors; this information can be stale and/or inaccurate.

Old or inaccurate traffic information can be troublesome for various reasons. For example, an alternate traffic route, which may be less convenient, is chosen due to a traffic report indicating that a traffic problem exists, which problem has since been alleviated. This can cause a commuter to take a less optimal route, which can waste fuel, cause them to be late, and cause congestion on side-roads. Conversely, a traffic report may indicate that the commuter's route is clear, when in fact an event has, in the meantime, created a traffic jam, since the traffic report is based on information that is not current. Portable devices equipped with satellite positioning technology (e.g., GPS, GLONASS, and so on) can be used as probes to report changes in position over time, which can be used in determining congestion information, for example.

### BRIEF DESCRIPTION OF THE DRAWINGS

Embodiments will now be described by way of example, and not limitation, with reference to the appended drawings wherein:

Figure 1 depicts a map with a trace of GPS fixes along a road;

Figure 2 depicts a displacement versus time plot that can be generated from a trace of GPS fixes, such as those of Figure 1;

Figure 3 depicts a method of selecting a list of GPS fixes to report, from the GPS fixes available in the trace;

Figure 4 depicts a linear approximation of the displacement curve shown in Figure 2;

Figure 5 depicts how additional segments can be added to the approximation, according to the method of Figure 3;

Figure 6 depicts how a normalization ratio can be used to translate time or displacement into the opposite parameter, in order to estimate a distance or error between the approximation and the displacement curve;

Figure 7 depicts a revised approximation based on an iteration of the method of Figure 3;

Figures 8 and 9 depict outputs of further iterations of the method of Figure 3;

Figure 10 depicts another example implementation, and references portions of the disclosure made with respect to Figure 5;

Figure 11 depicts an example mobile device in which these disclosures can be implemented, in a context of communicating over wireless communication network(s) to a server, to which the processed (reduced) list of GPS fixes can be sent;

Figure 12 depicts an example method that can be performed by a server in determining modes and parameters for mobile devices functioning as probes herein;

Figure 13 depicts an example of a mobile device receiving and using information from such a server; and

Figure 14 depicts an example of steps and parameters that can be taken or adjusted by a server, to be used in configuring mobile devices for probe functionality.

### DETAILED DESCRIPTION

It will be appreciated that for simplicity and clarity of illustration, where considered appropriate, reference numerals may be repeated among the figures to indicate corresponding or analogous elements. In addition, numerous specific details are set forth in order to provide a thorough understanding of the embodiments described herein. However, it will be understood by those of ordinary skill in the art that the embodiments described herein may be practiced without these specific details. In other instances, well-known methods, procedures and components have not been described in detail so as not to obscure the embodiments described herein. Also, the description is not to be considered as limiting the scope of the embodiments described herein.

The following relates to obtaining and processing position information, and for ease of description, such position information typically is referred to herein as Global Positioning System (GPS) data. However, it should be understood that these disclosures can be applied more broadly, such as to other implementations of satellite positioning systems, and to other mechanisms for acquiring positional fixes for a device in motion.

A mobile device can function as a probe to report position data over time, which can be used to determine information such as speed, and a road that the device is on, routes, and so on. For example, fixes obtained based on reception of satellite positioning signals can be reported over a cellular broadband or local area wireless connection. More precision can be had by more frequently obtaining a position and reporting that position. However, more frequently reporting a position requires more data channel bandwidth, and consumes more power on a device that may have a battery as a main source of power. For example, powering on a GPS receiver, activating a radio in order to signal a position, and sending the position through the radio to a receiver can consume a substantial amount of power. Also, at a receiving end, if many devices are reporting a stream of positions, receiving, storing, analyzing, and otherwise managing that data can become expensive and cumbersome.

Two principal information components are desirably captured from GPS data gathered over time. One information component relates to a spatial location of a device functioning as a probe, such as a particular road that the device is on, or where/when a device transitions from one road to another. Such information can be used to determine a route that a device traveled on a particular trip, for example. The other information component is information about a velocity of a device, even while a direction or heading of the device is not changing. Such information can be used in allocating a total amount of time required to traverse a given road (or portion of road) into appropriate portions, and from that information, traffic congestion and other information can be derived. Traffic information in turn can be used in determining whether a system user should be given a detour around detected traffic congestion, for example.

For an individual device, an amount data required to represent GPS fixes obtained by that device may be manageable. However, to implement a system where many devices function as traffic probes, over a potentially widely disparate and diverse geography and travel/road network, an amount of GPS fix data generated by all those devices may be overwhelming to transmit, store and process. Therefore, a way to reduce a quantity of such data, while maintaining a usefulness of the data for the purpose or purposes to which it will be put, is desirable.

Reducing an amount of positional data can be tackled by simply sampling the information more coarsely, and allowing interpolation of points at a receiving end. However, this disclosure indicates that such an approach can result in loss of useful information. Other considerations include that processing undertaken to reduce the amount of data transmitted should be reasonably simple for an available amount of resources on a mobile device (e.g., energy storage and computational resources.) Also, it would be desirable to provide an implementation that may tolerate introduction of errors in some estimates in exchange for having a consistent known maximum error bound for approximation data (a reduced dataset representing a trace of GPS fixes) transmitted from the mobile device.

In some implementations, a device obtains a trace or a set of GPS fixes over a predetermined time interval. The trace of GPS fixes can contain position and time information, such as a latitude/longitude and a sampling time for each GPS fix. Thus, the GPS fixes in the trace can be temporally ordered. In a temporally-ordered sequence of the GPS fixes, the device determines a displacement between a pair of adjacent GPS fixes (e.g., displacements between the first and second, and between the second and third GPS fixes are obtained). An example of a displacement is a scalar quantity of a number of feet, inches, meters, kilometres, and so on, between the GPS fixes at issue. Thus, each displacement is a scalarization of a vector pointing from one GPS fix to the subsequent one. An output of this step is a sequence of displacement/time pairs, where the time for each pair can be derived from the time interval that the GPS fix (or fixes) was taken.

In at least one implementation, a system for filtering GPS traces can obtain a set of GPS fixes in a mobile device over a pre-determined time interval. The system can determine a series of displacements from the set of GPS fixes and can determine a piece-wise linear approximation of the series of displacements. The piece-wise linear approximation can be defined by a subset of the series of displacements, where the members of the subset are selected to confirm the piece-wise linear approximation to the series of displacements within a defined error threshold. The system can generate a list of GPS fixes that correspond to the subset of the series of displacements and can send that list of GPS fixes. For example, the list of GPS fixes can be sent over a wireless network to other mobile devices or to a server for reporting and analysis of the positional data of the mobile device. By sending the GPS fixes of a subset of the series of displacements, data transmissions to and from the mobile device can be reduced in number and in size, thereby reducing the amount of bandwidth used by a server or a wireless network. Additionally, less time is required to determine and analyze the positional data of the mobile device as a subset of the series of displacements is sent from the mobile device rather than each and every positional displacement of the mobile device. While fewer transmissions and fewer GPS fixes are sent to and from the device, usefulness of the positional data transmitted is not compromised as the GPS fixes that are transmitted are a relevant and useful approximation of the actual displacements of the mobile device.

For ease of understanding, a graphical representation of this sequence is used in describing aspects of this disclosure. However, it should be understood that producing a graphical representation of such displacement data is not required to practice implementations according to this disclosure.

A start point and an end point are selected in the displacement sequence data (e.g., a displacement value corresponding to a start of the trace and a displacement value near the end). A line segment between the start and end points serves as an initial approximation of the displacement sequence. In one implementation, a perpendicular line from the line segment is drawn to intersect the displacement sequence data, and a maximum "distance" between the line segment and the displacement sequence data is identified. Since the displacement sequence represents displacement data (e.g., in meters) graphed with respect to time, the "distance" can initially represent a change along both coordinate axes (time and displacement). Therefore, a conversion from either time or distance to the other is performed, and a length of the resulting line is determined (e.g., by the Pythagorean Theorem). To clarify, the term "disparity" can be used herein to refer to a difference between a given displacement value and a corresponding estimate from the approximation curve being constructed.

In one approach, to convert between displacement and time (or vice versa), a constant pre-determined normalization ratio is used among a number of traces, as opposed to using a normalization ratio actually implied by the data of the sequence. By way of further explanation, a beginning point of the approximation may be at (0s, 0m), and an end point may be at (20s, 1500m), which would imply that the initial linear approximation would have a slope (normalization ratio of 75m/s); a second trace may have only traversed 800m in 20s, such that the slope implied in that second trace would be 40m/s.

However, rather than using different normalization ratios for each trace, a common ratio may be used; the ratio may be chosen based on a type of movement sensed at the mobile device. For example, the ratio can be chosen based on a mode of transportation or general speed of transportation being used (e.g., car, bicycle, plane, boat, walking, and so on). For automobiles, a ratio of about 10m/s, 15m/s, 20m/s, 25m/s, or a ratio selected from a range between 5m/s and 50m/s may be used. Using a common (i.e., among a number of traces being processed by a given device, and potentially by all devices processing traces that may be sent to the same server) ratio may introduce errors in some approximations. However, by using a common ratio, a known maximum error bound will be known for all the traces approximated with that ratio.

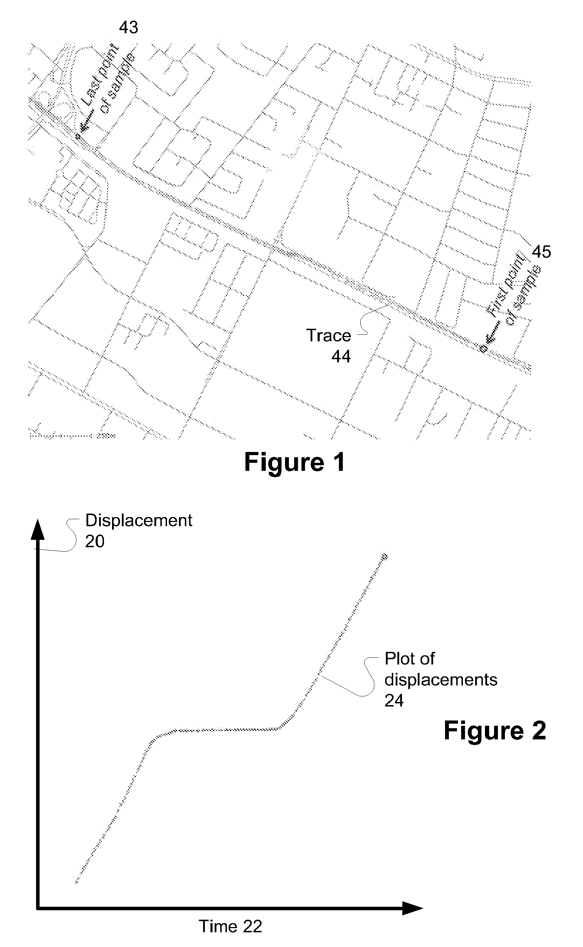

Now turning to Figure 1, a specific example of a trace 44 of GPS fixes is depicted. This trace can be one trace of a number of traces. The depicted GPS trace 44 can be defined by a first (start) point 45 and a last (end) point 43 in the trace, as would be evident by viewing the map on which the trace 44 is plotted. Figure 2 depicts a plot 24 of temporally-ordered displacements 20 (plotted versus time axis 22).

Trace 44 can be processed in order to extract/retain GPS fixes relevant to positional (spatial) inflection. Such processing can occur concurrently, before or after the processing principally described herein, which relates to processing to retain GPS fixes that can communicate velocity change information. Each informational component can be used to determine certain aspects of interest relating to movement of the probe device over time; the GPS fixes selected to capture spatial inflection information can be used to determine a path of travel of the probe device. The GPS fixes selected to capture velocity change information can be used to determine changes in velocity on given road segments, either alone or in conjunction with some or all of the spatial inflection GPS fixes.

Collectively, the GPS fixes can be used to determine both a travel path and a more granular estimate of the speed of the probe device at different points along the travel path. One generalized approach is to identify points where a change or inflection in space or in velocity indicates a point of interest to be captured. Absent a spatial inflection, a direction of travel of the device can be assumed constant, such that interpolations or extrapolations based on a previous GPS fix, or between two GPS fixes can be used. Similarly, absent a velocity inflection, a velocity between GPS fixes can be assumed constant, for purposes of interpolation and extrapolation.

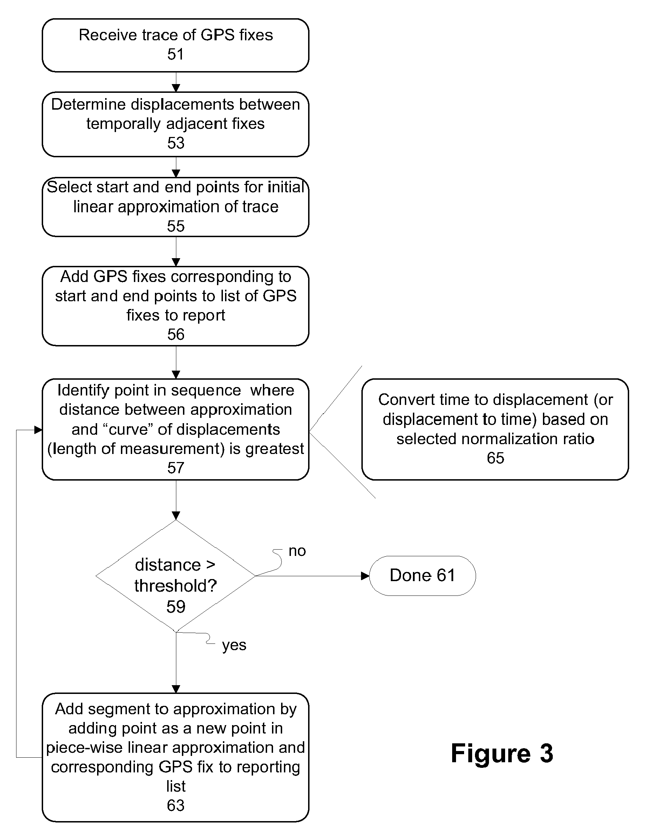

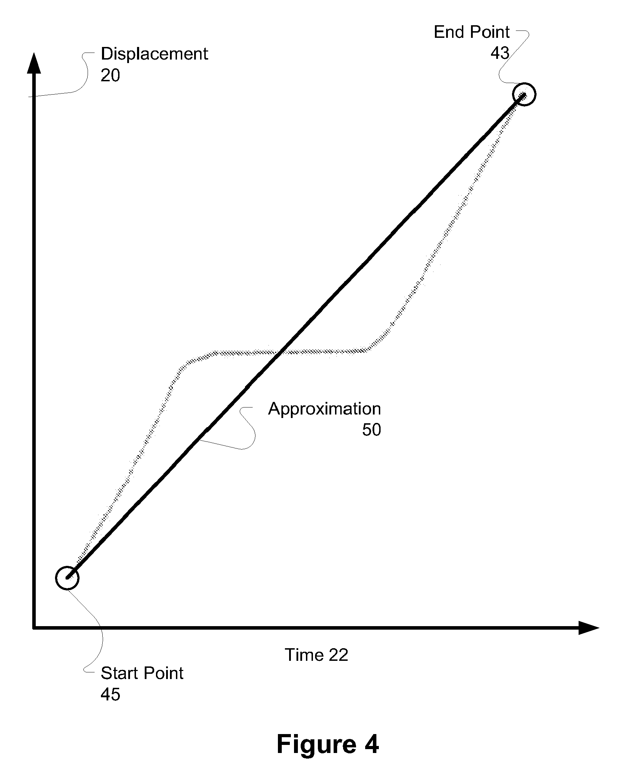

Figure 3 depicts a first example method that includes receiving (51) a trace of GPS fixes (e.g., trace 44) and determining (53) a temporally-ordered sequence of displacements (see Figure 2) from the trace. An initial approximation for the trace is based on selecting (55) start and end points for displacements from the sequence (e.g., selecting actual displacements, or interpolating, if desired). Figure 4 depicts approximation 50 drawn between first point 45 and end point 43. GPS fixes corresponding to the start point 43 and end point 45 are added to a list of GPS fixes that will be reported for the trace.

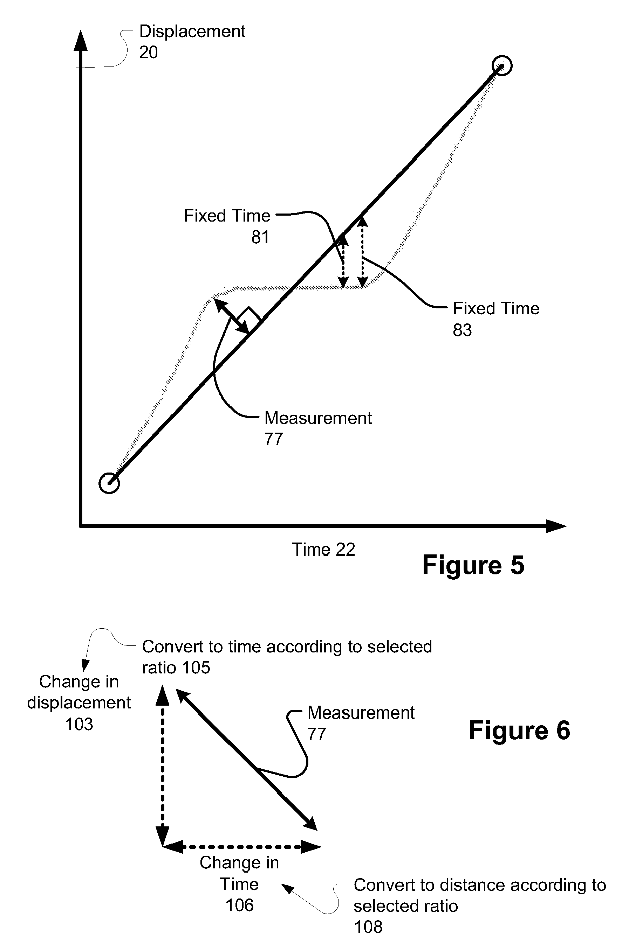

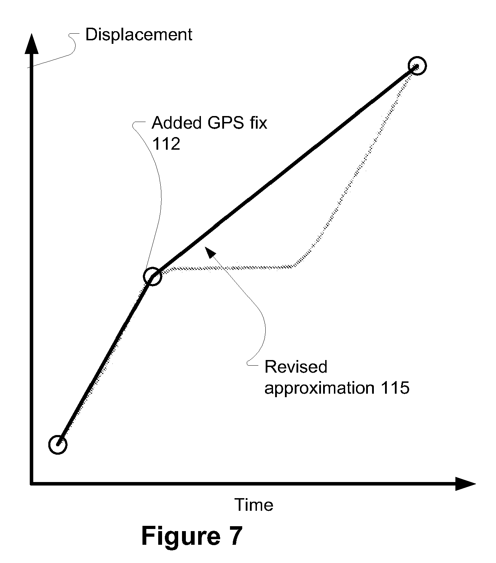

A displacement (or point in the sequence (either virtual or actual)) is identified (57) based on determining a greatest excursion (or "distance") between the approximation and the displacements. An example is measurement 77 of Figure 5. This identification (57) can make use of the fixed ratio approach introduced above, where for each displacement sequence, a pre-determined common normalization ratio is used to convert (65) either time or distance to a quantity in the other dimension, so that a scalar length of the measurement 77 can be determined (see discussion relating to Figure 6, below). If the determined length is greater than a threshold (or greater than or equal to a threshold, e.g.), then the GPS fix corresponding to the point in the displacement sequence is added to the list of GPS fixes that will be reported or sent, and a segment is added to the piece-wise linear approximation of the displacements. For example, in at least one implementation, the threshold can be a defined error threshold. In at least one embodiment, the piece-wise approximation can be a piece-wise polynomial approximation. Figure 7 depicts the addition of a segment to the piece-wise linear approximation (revised approximation 115), with added GPS fix 112 (understand, that the graph depicts displacement, not locational relationships, as with a typical GPS fix). In another embodiment the addition of a segment can be to a piece-wise polynomial approximation where a polynomial approximate was implemented.

If the length of measurement 77 is not greater than the error threshold (determination 59), then the method can end 61. In this example, since the maximum point always is treated, the method can end if the maximum is less the threshold, since that condition is sufficient to guarantee that no other point in the approximation has a greater difference to a corresponding point in the displacement sequence. However, if local maxima were treated, then another iteration to identify any other potential local maxima also may be conducted.

Figure 6 depicts more information about how measurement 77 (for example) can be translated from a line that potentially varies in both time and distance to a scalar number that can be more easily evaluated with respect to a threshold. Measurement 77 can be viewed as composed of a change in time 106 and a change in displacement 103. Either change in time 106 can be translated into a change in displacement, by application of a normalization ratio, or the change in displacement (103) can be converted into a change in time (108). Thereafter, the changes in the common measurement quantity (either displacement or time) can be used to determine a length of measurement 77.

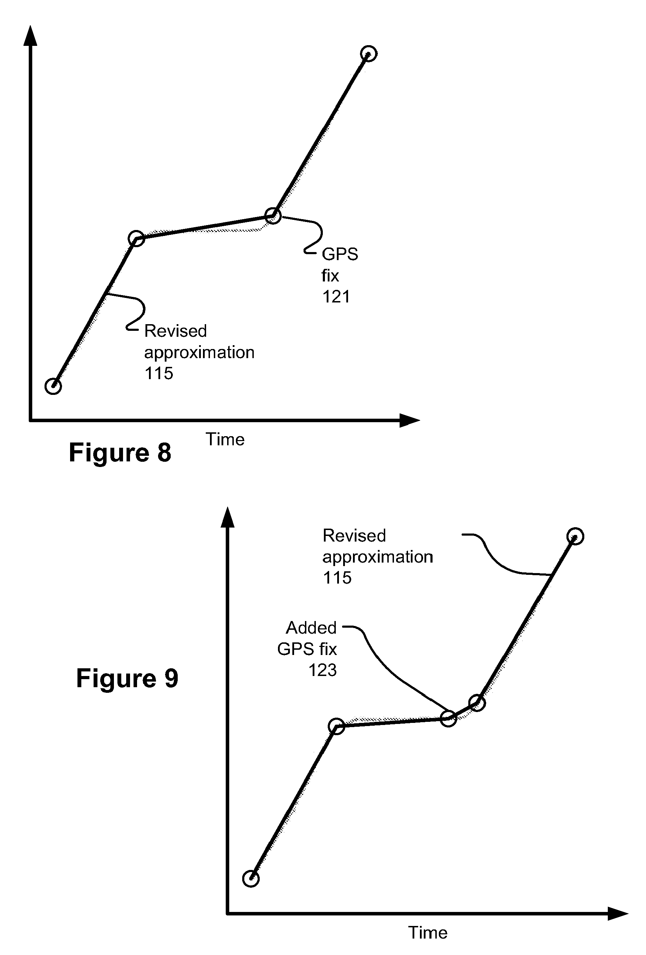

Figure 8 depicts a graphical representation of another iteration of the method depicted in Figure 3, in which another GPS fix 121 is added according to the approach disclosed above, resulting in the depicted revised approximation 115. Figure 9 depicts a further iteration, in which a further GPS fix 123 is added, resulting in the revised approximation 115 depicted. As can be seen, with each iteration, the approximation becomes a more faithful representation of the full set of displacements.

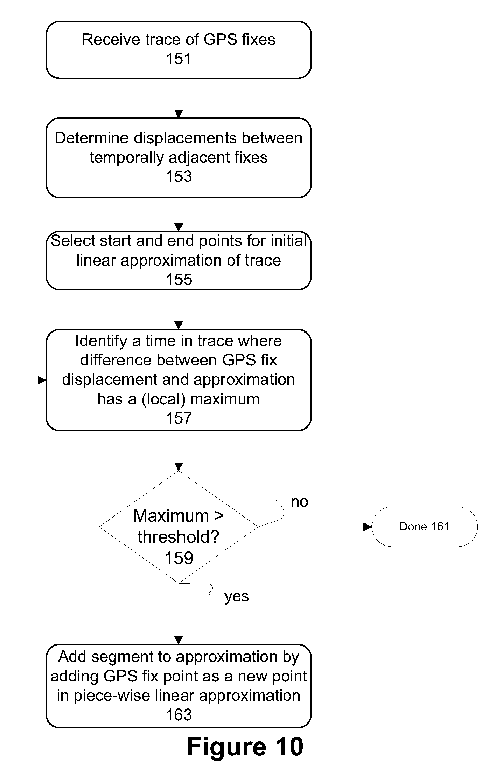

Now returning to Figure 5 and with respect to Figure 10, a different example implementation is depicted and described. Figure 5 depicts that a fixed time displacement differential 81 and 83 also can be analyzed (as opposed to measurement 77, which varies in both time and displacement). A difference between estimated displacement and actual displacement is considered for each time point, and where a maximum (or a local maximum) difference in displacement is identified, a GPS fix can be added to the reporting list, and a point added to the piece wise linear approximation of the displacement curve, as explained above.

Figure 10 depicts a method according to such an approach, and includes receiving (151) a trace of GPS fixes and determining (153) displacements between temporally adjacent fixes. As in the method of Figure 3, start and end points for an initial linear approximation of the displacement curve are selected (155). A time in the displacement curve where a difference between a displacement for the GPS fix data has either a maximum or local maximum is identified (157). For example, a local maximum can be identified by comparing displacements with their corresponding point in the approximation, and where a difference has peaked and begins to decrease, a local (and potentially absolute) maximum has been identified. One iteration of the displacement sequence to identify a largest difference can be used to identify an absolute maximum. If the identified maximum is greater than an error threshold, then a GPS fix corresponding to that displacement is added to the reporting list, and the approximation is updated to reflect a new line segment, as explained above, with respect to Figure 3. If the maximum is not greater than the error threshold, the method can end (161), which is an appropriate approach for a global maximum. A search may be begun at a beginning of the displacement curve, or continued from the most recent GPS fix added to the list of GPS fixes.

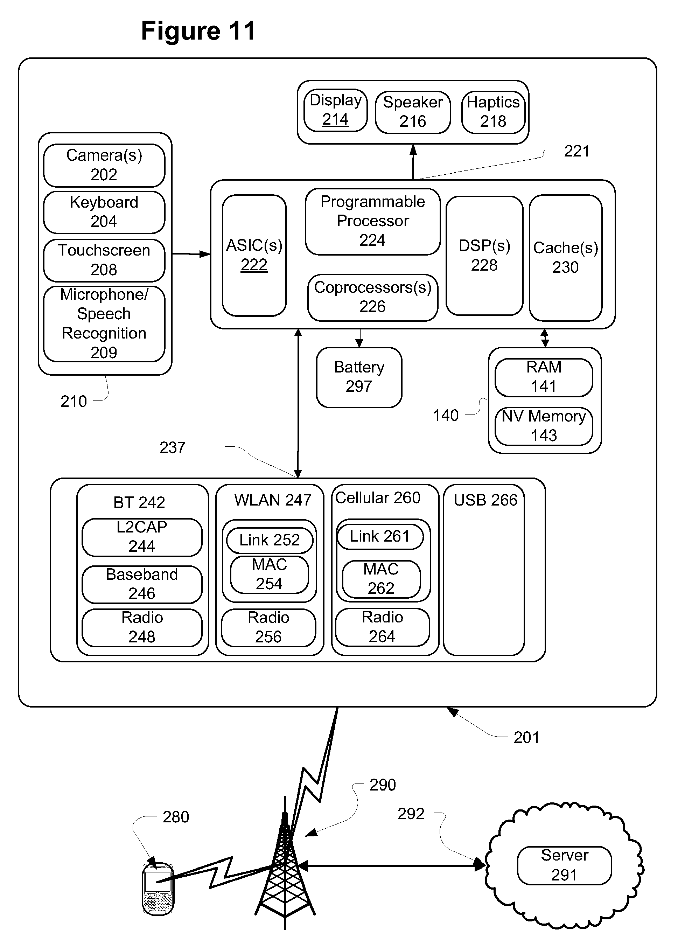

Figure 11 depicts example components that can be used in implementing a mobile device 201. Figure 11 depicts that a processing module 221 may be composed of a plurality of different processing elements, including one or more ASICs 222, a programmable processor 224, one or more co-processors 226, which each can be fixed function, reconfigurable or programmable, and one or more digital signal processors 228. For example, ASIC or coprocessor 222 may be provided for implementing graphics functionality, encryption and decryption, audio filtering, and other such functions that often involve many repetitive, math-intensive steps. Processing module 221 can comprise memory to be used during processing, such as one or more cache memories 230.

Processing module 221 communicates with mass storage 240, which can be composed of a Random Access Memory 241 and of non-volatile memory 243. Non-volatile memory 243 can be implemented with one or more of Flash memory, PROM, EPROM, and so on. Non-volatile memory 243 can be implemented as flash memory, ferromagnetic, phase-change memory, and other non-volatile memory technologies. Non-volatile memory 243 also can store programs, device state, various user information, one or more operating systems, device configuration data, and other data that may need to be accessed persistently. A battery 297 can power device 201 occasionally, or in some cases, it can be a sole source of power. Battery 297 may be rechargeable.

User input interface 210 can comprise a plurality of different sources of user input, such as a camera 202, a keyboard 204, a touchscreen 208, and a microphone, which can provide input to speech recognition functionality 209. Output mechanisms 212 can include a display 214, a speaker 216 and haptics 218, for example. These output mechanisms 212 can be used to provide a variety of outputs that can be sensed by a human, in response to information provided from processing module 221.

Processing module 221 also can use a variety of network communication protocols, grouped for description purposes here into a communication module 237, which can include a Bluetooth communication stack 242, which comprises a L2CAP layer 244, a baseband 246 and a radio 248. Communications module 237 also can comprise a Wireless Local Area Network (247) interface, which comprises a link layer 252 with a MAC 254, and a radio 256. Communications module 237 also can comprise a cellular broadband data network interface 260, which in turn comprises a link layer 261, with a MAC 262. Cellular interface 260 also can comprise a radio 264 for an appropriate frequency spectrum. Communications module 237 also can comprise a USB interface 266, to provide wired data communication capability. Other wireless and wired communication technologies also can be provided, and this description is exemplary.

Figure 11 also depicts that device 201 can communicate over a wireless network with a base station or cell tower 290 (respectively, for example, for communications using local area network wireless solutions, and broadband wireless solutions). Base station or cell tower 290 communicates with a backhaul, not separately illustrated, that allows the communications sent from device 201 to arrive at a server 291, which can be reached over Internet 202, for example. Figure 11 also depicts that other devices can be constructed according to the example of device 201 and can communicate over network infrastructure with server 291 to report GPS fixes determined according to this disclosure. It would be understood that server 291 can be implemented by a wide variety of combinations of hardware and software elements, such as a plurality of individual processing and storage nodes, which can be distributed and can communicate over a variety of communication links. Therefore, identification of server 291 does not imply a single component.

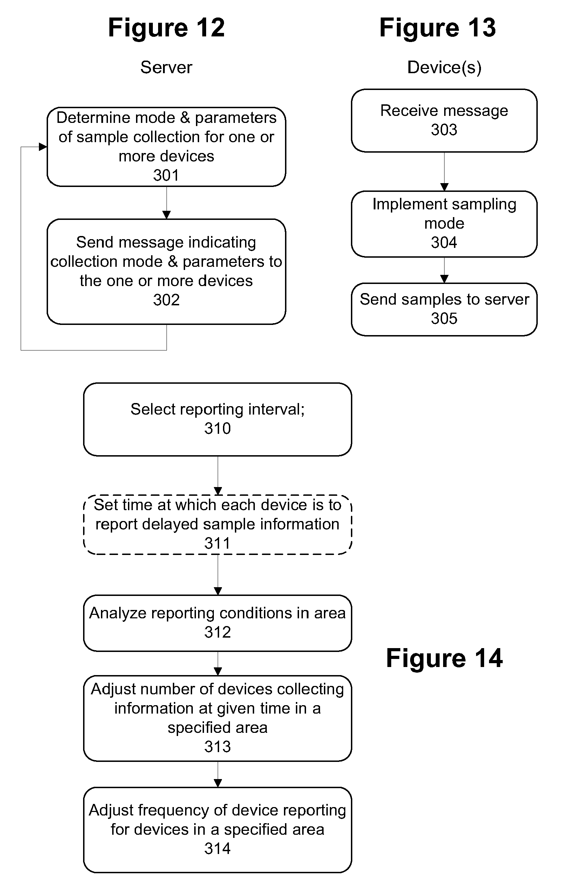

Figures 12-14 depict method aspects relating to configurability of aspects relating to reporting of position data by a device (e.g., device 201) functioning as a probe according to these disclosures. One aspect is that a server can determine parameters and a mode of reporting for each device that can send or is sending data to the server. For example, two modes of operation from which a selection can be made are active and delayed modes. In an active mode, a device can report GPS fixes on a relatively short time interval, such as 1 minute, 2 minutes or 5 minutes. In a delayed mode, a device can record GPS fixes for a longer time interval such as an hour, 12 hours, or 24 hours, and report that information relatively infrequently. Specifics concerning such sample collection can be specified (301) as parameters, along with an operating mode, by the server. A message or messages indicating a mode of reporting and such parameters can be sent (302) from the server to one or more devices. A device can receive (303) such message, and implement (304) the sampling mode and other parameters specified, and send (305) samples to the server accordingly.

In a given system, a variety of devices can be available to report data. The devices can be located in different geographic vicinities. In some cases, an amount of data provided along a particular road, or in a particular geographic, can be gathered from a subset of available devices, or by less frequent sampling of devices, or both. Therefore, examples of parameters that can be set are exemplified by Figure 14. One parameter is a reporting time interval, which specifies how frequently a device should report GPS fixes selected as described above (310). Different devices can be assigned different reporting time intervals. For example, if more devices are present within a given vicinity, then each of the devices may need to report less frequently. If a delayed reporting mode is signalled (e.g., reporting only once a day), then a time at which the report is to occur can be specified (311). For example, the upload of GPS fixes can occur during off-peak hours, or when server loads are lighter. These parameters can be set responsive to conditions observed (312) in a given reporting area, such as quality and completeness of information being reported from a given geographic vicinity. Responsively, a number of devices reporting can be adjusted (313), such as adjusted up to gather more data, or down to gather less data. Similarly, a frequency of reporting by select devices can be adjusted (314). These parameters can be adjusted based on observed conditions at a server, as well as other conditions, such as network loads, costs of data transmission, and the like. Thus, can control reporting behaviour of probes located in a variety of areas, in order to achieve sufficient reporting without undesirable redundancy. These disclosures serve as examples of how a system of probes can be controlled and used to gather data from a wide variety of geographic areas, while reducing redundancy, and helping the probes conserve on-board resources, such as battery life. The error threshold disclosed above also can be set by the server or based on information provided from the server.

Examples are presented herein to reduce the fixes that need to be transmitted, while still transmitting positional data with useful properties. These examples are not exhaustive, but provide illustrative embodiments of teachings contained herein. The example approaches include fitting a line or a polynomial curve to a set of displacement points, in order to identify GPS fixes that have useful information. Thus, in one summary, some aspects relate to fitting a curve, linear or otherwise, to a series of displacements derived from a trace of GPS fixes, in order to identify a subset of the GPS fixes to report. In other words, the above disclosure relates to approaches for determining which GPS fixes to transmit rather than sending each and every GPS fix of a mobile device. Transmitting a subset of GPS fixes reduces the amount, size, and time of data transmissions from the mobile device without compromising the usefulness of the GPS fixes for analysis of the mobile device's positional data. Additionally, reducing the transmissions of GPS fixes reduces the occupation of the transmissions on a server's or cellular network's bandwidth.

While figures and related description describe piece-wise linear approximation, those of ordinary skill in the art will appreciate that polynomial approximations can be implemented. With polynomial approximations, more GPS fixes are transmitted to and from the mobile device, as the mobile device's path is approximated by a polynomial curve having more GPS fixes that trace the actual path of the mobile device. For example, more GPS fixes are transmitted to and from the mobile device than just a start point and an end point or a point of change of velocity or change of direction. As more GPS fixes are transmitted, a polynomial approximation can be determined which more accurately resembles the mobile device's path than just a linear approximation of start and an end point.

However, by using piece-wise linear approximations, data transmissions to and from mobile devices are further reduced. With linear approximations, the system for filtering GPS traces determines a distance vector rather than an approximation of the traveled path. Thus, in an implementation utilizing piece-wise linear approximation, the system is concerned with a start point and an end point of a mobile device's path rather than the actual path, thereby allowing fewer GPS fixes to be transmitted as compared to fitting the approximation of traveled path. As even fewer GPS fixes are transmitted, less data is transmitted to and from the mobile device, thereby further enhancing battery life of the mobile device and further reducing occupied bandwidth of a server or wireless network used in transmitting the GPS fixes. While data transmissions and occupied bandwidth are further reduced using linear approximation rather than path approximation, the usefulness of the information relating to the GPS fixes is not compromised as a determination is made that the GPS fix meets a defined threshold indicating the GPS fix is a useful GPS fix of interest.

The above description occasionally describes relative timing of events, signals, actions, and the like as occurring "when" another event, signal, action, or the like happens. Such description is not to be construed as requiring a concurrency or any absolute timing, unless otherwise indicated.

Certain adaptations and modifications of the described embodiments can be made. Aspects that can be applied to various embodiments may have been described with respect to only a portion of those embodiments, for sake of clarity. However, it is to be understood that these aspects can be provided in or applied to other embodiments as well. Therefore, the above discussed embodiments are considered to be illustrative and not restrictive.

## Claims

1. A method, comprising:
obtaining (51) a set (24) of GPS fixes (43, 45) in a mobile device (201) over a pre-determined time interval;
determining (53) a portion (115) of the set of GPS (43, 45) fixes using a piece-wise linear approximation (50) of the set of GPS fixes (43, 45) having an approximation error below a pre-defined error threshold; and
sending (63), from the mobile device (201), the determined portion (115) of the set of GPS fixes (112, 121, 123) to represent the set (24) of GPS fixes (43, 45).

2. The method of claim 1, wherein the pre-determined time interval is set at the mobile device (201) based on information from a server (291).

3. The method as recited in any one of the preceding claims, wherein the pre-determined time interval is set at the mobile device (201) based on conditions at the server (219).

4. The method as recited in any one of the preceding claims, wherein the pre-defined error threshold is set at the mobile device (201) based a type of movement sensed at the mobile device (201).

5. The method as recited in any one of the preceding claims, wherein the determined portion (115) of the set of GPS fixes to represent the set (24) of GPS fixes is a piece-wise approximation (50).

6. The method as recited in any one of the preceding claims, wherein the determined portion (115) of the set of GPS fixes to represent the set (24) of GPS fixes is a piece-wise polynomial approximation.

7. A tangible computer readable medium storing instructions for configuring a processor (219) to perform a method according to any one of method claims 1-6.

8. A system, comprising:
a plurality of mobile devices (201), each comprising a network interface (260) and a processor (224) configured to perform a method as recited in any one of claims 1-6; and
a server (291) coupled to receive the portions of the set of GPS fixes sent by each mobile device (201), and to send messages to the mobile devices (201) with pre-determined time intervals to be applied by those mobile devices (201).

9. A method, comprising:
obtaining (51) a trace of GPS fixes (43, 45) in a mobile device (201);
determining (53) a series (24) of displacements (22), ordered with respect to time, from the trace of GPS fixes (43, 45);
determining (55, 56, 57, 65, 59, 61) a piece-wise linear curve that approximates the series (24) of displacements, the piece-wise linear curve (50) defined by a subset (115) of the series (24) of displacements, wherein the members of the subset (115) are selected to conform the piece-wise linear curve to the series (24) within a defined error threshold; and
sending (63), from the mobile device (201), a list (112, 121, 123) of GPS fixes identified based on the subset (115) of the series (24) of displacements, as an approximation of the trace of GPS fixes (43, 45).

10. The method of claim 9, wherein the members of the subset (115) are selected by determining (57) a disparity (77) between a point along the piece-wise linear curve (50), and a displacement identified along a line extending perpendicular to the piece-wise linear curve (50) at the point, and quantifying (65) the disparity (77) by converting a change in time (106) into a change in displacement (108) according to a determined normalization ratio.

11. The method of claim 10, wherein the determining (57) is performed iteratively, with a largest disparity (77) identified addressed in each iteration.

12. The method as recited in any one of claims 9-11, wherein the members of the subset (115) are selected by determining (57) a disparity (77) between a point along the piece-wise linear curve (50), and a displacement (20) identified along a line extending perpendicular to the piece-wise linear curve (50) at the point, and quantifying (65) the disparity (77) by converting a change in displacement (103) into a change in time (105) according to a determined normalization ratio.

13. The method as recited in any one of claims 9-12, wherein the members of the subset (115) are selected by determining, for each displacement (20) in the series, a disparity (77) between the displacement (20) and the piece-wise linear curve (50) at a time (22) associated with the displacement (20), and for a largest determined disparity (77), adding a segment to the piece-wise linear approximation (50), and a GPS fix (112, 121, 123)) associated with that displacement (22) to the list of GPS fixes.

14. The method as recited in any one of claims 9-13, wherein the members of the subset (115) are selected by recursively determining a largest disparity (77) between the series (24) of displacements (22) and each piece of the piece-wise linear curve (50), and responsively adding a piece to the piece-wise linear curve (50) and a GPS fix (112, 121, 123) associated with the displacement (22) having the largest disparity (77) to the list of GPS fixes.

15. A mobile device, comprising:
a wireless network interface (260);
a memory (140); and
a processor (224) coupled with the memory (140) and with the wireless network interface (260), the processor (224) configured to execute the method as recited in any one of claims 1-7 or 9-14.
